(19) **Europäisches Patentamt / European Patent Office / Office européen des brevets**

(11) **EP 2 613 210 B1**

(12) **FASCICULE DE BREVET EUROPEEN**

(45) Date de publication et mention de la délivrance du brevet:
**30.03.2016 Bulletin 2016/13**

(51) Int Cl.:
**G05B 19/402** (2006.01)

(21) Numéro de dépôt: **13150028.2**

(22) Date de dépôt: **02.01.2013**

(54) **Dispositif de positionnement angulaire d'une pièce pivotante et procédé de commande d'un tel dispositif**

Vorrichtung zur Winkelpositionierung eines Kippelements, und Steuerverfahren einer solchen Vorrichtung

Device for angular positioning of a pivoting component and method for controlling such a device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.01.2012 FR 1250061**

(43) Date de publication de la demande:
**10.07.2013 Bulletin 2013/28**

(73) Titulaire: **SAGEM DEFENSE SECURITE**
**92100 Boulogne Billancourt (FR)**

(72) Inventeur: **Encaoua, Serge**
**75015 Paris (FR)**

(74) Mandataire: **Lavialle, Bruno François Stéphane et al**
**Cabinet Boettcher**
**16, rue Médéric**
**75017 Paris (FR)**

(56) Documents cités:
**US-A- 4 005 819    US-A- 4 090 131**

**Description**

La présente invention concerne un dispositif de positionnement angulaire d'une pièce par rapport à un bâti fixe et un procédé de commande d'un dispositif de ce type.

Un tel dispositif de positionnement angulaire comporte un bâti fixe et un moteur électrique ayant un arbre de sortie relié à une pièce mobile montée pour pivoter en regard du bâti. La pièce mobile sert par exemple de support à un équipement dont le fonctionnement demande qu'il soit orienté de manière particulière par rapport au bâti. Le positionnement angulaire et le maintien de la pièce mobile en position sont assurés par la commande du moteur électrique.

Dans certaines applications, il est nécessaire que la pièce mobile puisse être maintenue dans une position angulaire particulière sans que le moteur ne soit alimenté. Tel est le cas par exemple pour les dispositifs embarqués dans lesquels les ressources en énergie sont limitées, plus particulièrement lors des phases préparatoires à la mise en fonctionnement de ceux-ci. Il est alors généralement prévu un organe mécanique de maintien en position comme un verrou monté sur le bâti pour être déplaçable par un moteur selon une direction radiale de la pièce mobile entre une position de verrouillage dans laquelle le verrou est en saillie dans un logement correspondant de la pièce mobile et une position de déverrouillage dans laquelle le verrou est escamoté et libère la rotation de la pièce mobile. Un tel dispositif consomme peu d'énergie mais est lourd, complexe et coûteux. Le verrou peut être remplacé par une bille forcée élastiquement en appui contre une surface cylindrique de la pièce mobile. La surface cylindrique est centrée sur l'axe de pivotement de la pièce mobile et comporte un renfoncement pour recevoir la bille lorsque la pièce mobile est dans une position angulaire prédéterminée par rapport au bâti. Ce mécanisme est simple, léger et assez fiable. Toutefois, le dégagement de la pièce mobile hors de ladite position demande que le moteur électrique exerce sur la pièce mobile un couple supplémentaire qui est très consommateur en énergie. En outre, la bille exerce un effort continuel sur toute la course de pivotement de la pièce mobile, ce qui entraîne une surconsommation d'énergie.

Un but de l'invention est de fournir un moyen pour remédier à tout ou partie de ces inconvénients.

A cet effet, on prévoit, selon l'invention, un procédé de commande d'un dispositif de positionnement angulaire comportant un bâti fixe, un moteur électrique ayant un arbre de sortie relié à une pièce mobile montée pour pivoter en regard du bâti, et une paire d'aimants qui sont montés respectivement sur le bâti et la pièce mobile pour pouvoir être amenés dans une position en regard l'un de l'autre par le pivotement de la pièce mobile et qui sont polarisés de manière à s'attirer mutuellement lorsqu'ils sont dans la position en regard et exercer un couple de rappel magnétique de la pièce mobile vers la position en regard, le procédé de commande comprenant l'étape d'alimenter le moteur électrique de manière à vaincre le couple de rappel magnétique, le moteur électrique étant alimenté de manière à produire successivement des couples opposés inférieurs au couple de rappel magnétique et selon une fréquence sensiblement égale à une fréquence de résonance d'un ensemble comprenant la pièce mobile et la paire d'aimants.

Ainsi, le maintien de la pièce mobile dans la position en regard est assuré par la paire d'aimants qui constitue un organe de rappel magnétique de la pièce mobile en position. Ce dispositif est simple léger et particulièrement fiable puisqu'il ne fait appel à aucun élément mobile. Les aimants peuvent en outre être choisis pour que le couple de rappel décroisse rapidement lorsque les aimants s'éloignent l'un de l'autre de sorte que l'entraînement en pivotement de la pièce mobile est faiblement consommateur en énergie une fois que la pièce mobile est sortie de la position en regard.

Ce mode de commande est particulièrement économe en énergie. L'exploitation de la résonance naturelle de l'ensemble pièce mobile (et tous les éléments qui sont fixés sur celle-ci) et aimants permet de minimiser le couple maximal nécessaire au dégagement de la pièce mobile hors de la position en regard.

L'invention a également pour objet un dispositif pour la mise en oeuvre de ce procédé.

D'autres caractéristiques et avantages de l'invention ressortiront à la lecture de la description qui suit de modes de réalisation particuliers non limitatifs de l'invention.

Il sera fait référence aux dessins annexés, parmi lesquels :

- la figure 1 est une vue schématique d'un dispositif de positionnement angulaire conforme à l'invention,
- la figure 2 est un diagramme montrant la variation du couple de rappel en fonction de l'angle,
- la figure 3 est un diagramme montrant le couple en fonction du temps lors d'une commande d'un moteur de ce dispositif,
- la figure 4 est un diagramme montrant la variation de la position angulaire en fonction du temps suite à cette commande.

En référence aux figures, le dispositif de positionnement angulaire selon l'invention comporte un bâti 1 fixe sur lequel est montée une pièce mobile 2 pour pivoter en regard du bâti 1. La pièce mobile 2 est ici de forme annulaire et coaxiale au bâti 1. Des roulements ou paliers lisses non représentés assurent le guidage en rotation de la pièce mobile 2. La pièce mobile 2 est par exemple agencé pour supporter un équipement et permettre son orientation par rapport au bâti 1.

Le dispositif comprend en outre un moteur électrique 3 ayant un arbre de sortie relié à la pièce mobile 2 pour l'entraîner en rotation. Le moteur électrique 3 est ici un moteur couple. Le moteur électrique 3 est relié à une unité de commande non représentée qui exécute un programme de pilotage de l'alimentation du monteur électrique 3.

Le dispositif comprend une paire d'aimants 4, 5 qui sont montés respectivement sur le bâti 1 et la pièce mobile 2 pour pouvoir être amenés dans une position en regard l'un de l'autre par le pivotement de la pièce mobile 2. Les aimants 4, 5 sont polarisés de manière à s'attirer mutuellement lorsqu'ils sont dans la position en regard et à exercer un couple de rappel magnétique de la pièce mobile 2 vers la position en regard.

Le couple de rappel C, pour un angle A petit (<10°) entre les aimants, vaut :

$$C = \frac{KR^2 A}{\left(E^2 + R^2 A^2\right)^{3/2}}$$

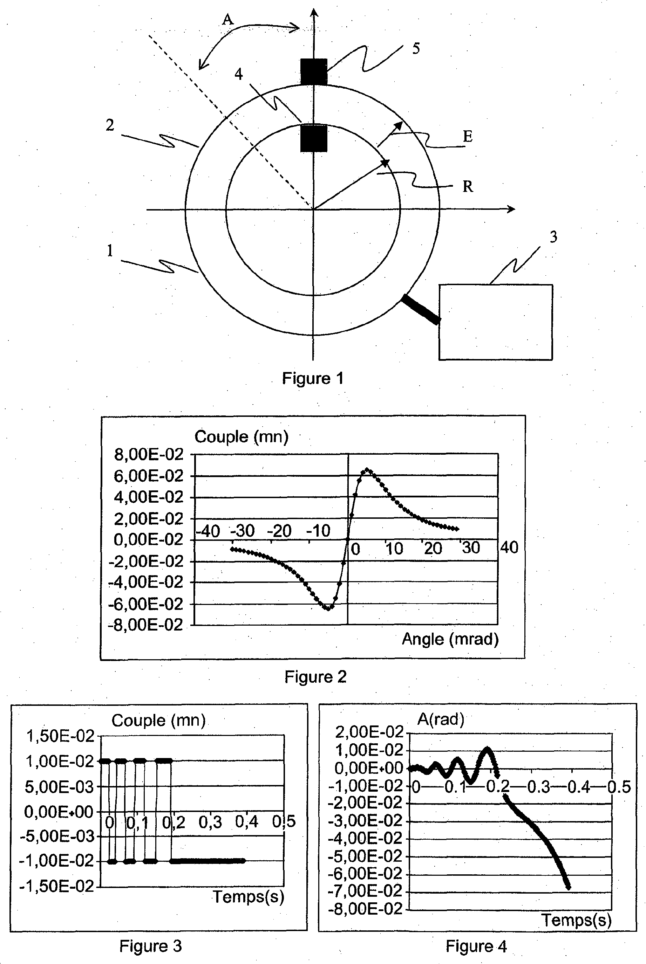

avec C, le couple (Nm) ; A, l'angle (rad) entre les aimants ; K, une constante magnétique liée aux aimants ; E, entrefer (m) entre les aimants. Le couple de rappel C est représenté sur la figure 2 en fonction de l'angle A pour un exemple particulier. On voit que le couple de rappel est maximum pour une valeur de l'angle d'environ 5 mRad puis diminue très rapidement au fur et à mesure que l'angle grandit pour être quasi nul au-delà de 30 mRad.

On comprend que, dans la position en regard, le couple de rappel élastique s'oppose à un pivotement de la pièce mobile 2.

L'invention a pour objet un procédé de commande d'un tel dispositif pour dégager la pièce mobile 2 de la position en regard. Ce procédé comprend l'étape d'alimenter le moteur électrique 3 de manière à vaincre le couple de rappel magnétique.

Le moteur électrique 3 est alimenté de manière à produire successivement des couples opposés inférieurs au couple de rappel magnétique et selon une fréquence sénsiblement égale à une fréquence de résonance d'un ensemble comprenant la pièce mobile (et l'équipement qu'elle supporte ainsi que toute autre élément fixé sur elle) et la paire d'aimants.

En effet, cet ensemble possède une raideur en torsion Kr au voisinage de la position en regard, dont la valeur approchée est :

$$Kr = \frac{C\max}{A\max}$$

avec Kr, la raideur en torsion (Nm/rad) ; C max, le couple de rappel max ; et A max, l'angle correspondant au couple de rappel maxi.

Ce dispositif possède une fréquence de résonance naturelle

$$F = \frac{1}{2\pi}\sqrt{Kr/I}$$

avec F, la fréquence de résonance (Hz) et I, l'inertie de la partie mobile (Kg. m$^2$).

En prenant, les valeurs indiquées sur la figure 2 (soit Cmax = 0,06 Nm et A = 5 mrad) et I=12.10$^{-4}$ kg. m$^2$ par exemple, on obtient une valeur Kr =12 Nm/rad et une fréquence de résonance F= 16 Hz.

Ce mode de commande permet de minimiser la puissance crête nécessaire au dégagement de la pièce mobile 2 de la position en regard en exploitant cette résonance naturelle. Un exemple de commande est une succession de créneaux en couple alternativement positifs et négatifs, de fréquence égale à la fréquence de résonance, c'est-à-dire 16Hz dans cet exemple, suivi d'une commande à couple constant (voir la figure 3).

On peut ainsi diminuer le couple maximum commandé dans un rapport de la classe >4 par rapport à la valeur obtenue à couple constant (0,055 Nm), ce qui permet un gain sur la consommation crête d'un rapport de la classe >16 dans le cas d'une commande par un moteur couple.

Bien entendu, l'invention n'est pas limitée aux modes de réalisation décrits mais englobe toute variante entrant dans le champ de l'invention telle que définie par les revendications.

En particulier, la structure mécanique du dispositif de positionnement peut être différente de celle décrite. La pièce mobile peut être reçue dans le bâti. Les aimants peuvent être montés directement sur le bâti et la pièce mobile ou sur des éléments rapportés sur ceux-ci. La pièce mobile peut comprendre un cardan ou tout autre type de support.

Il est possible de prévoir une bobine autour de l'un des aimants pour en diminuer, voire annuler, le flux de façon à limiter le couple que doit produire le moteur pour dégager la pièce mobile de la position en regard.

**Revendications**

1. Procédé de commande d'un dispositif de positionnement angulaire comportant un bâti fixe (1), un moteur électrique (3) ayant un arbre de sortie relié à une pièce mobile (2) montée pour pivoter en regard du bâti, et une paire d'aimants (4, 5) qui sont montés respectivement sur le bâti et la pièce mobile pour pouvoir être amenés dans une position en regard l'un de l'autre par le pivotement de la pièce mobile et qui sont polarisés de manière à s'attirer mutuellement lorsqu'ils sont dans la position en regard et exercer un couple de rappel magnétique de la pièce mobile vers la position en regard, le procédé de commande comprenant l'étape d'alimenter le moteur électrique (3) de manière à vaincre le couple de rappel magnétique, **caractérisé en ce que** le moteur électrique (3) est alimenté de manière à produire successivement des couples opposés inférieurs au couple de rappel magnétique et selon une fréquence sensiblement égale à une fréquence de résonance d'un ensemble comprenant la pièce mobile et la paire d'aimants.

2. Dispositif de positionnement angulaire pour la mise en oeuvre de ce procédé, comportant un bâti fixe (1), un moteur électrique (3) ayant un arbre de sortie relié à une pièce mobile (2) montée pour pivoter en regard du bâti, et une paire d'aimants (4, 5) qui sont montés respectivement sur le bâti et la pièce mobile pour pouvoir être amenés dans une position en regard l'un de l'autre par le pivotement de la pièce mobile et qui sont polarisés de manière à s'attirer mutuellement lorsqu'ils sont dans la position en regard et exercer un couple de rappel magnétique de la pièce mobile vers la position en regard, et **caractérisé en ce que** le dispositif comporte une unité de commande agencée pour alimenter le moteur électrique de manière à produire successivement des couples opposés inférieurs au couple de rappel magnétique et selon une fréquence sensiblement égale à une fréquence de résonance d'un ensemble comprenant la pièce mobile et la paire d'aimants.

**Patentansprüche**

1. Verfahren zum Steuern einer Vorrichtung zur Winkelpositionierung, umfassend ein ortsfestes Gestell (1), einen Elektromotor (3), der eine Abtriebswelle hat, die mit einem beweglichen Teil (2) verbunden ist, das gegenüber dem Gestell drehbar gelagert ist, sowie ein Paar von Magneten (4, 5), die an dem Gestell bzw. dem beweglichen Teil gelagert sind, um durch die Drehung des beweglichen Teils in eine einander gegenüberliegende Stellung gebracht werden zu können, und die derart gepolt sind, dass sie sich gegenseitig anziehen, wenn sie in der Gegenüberstellung sind, und ein magnetisches Rückstellmoment zum Rückstellen des beweglichen Teils in die Gegenüberstellung ausüben, wobei das Steuerverfahren den Schritt des Speisens des Elektromotors (3) umfasst, derart, dass das magnetische Rückstellmoment überwunden wird, **dadurch gekennzeichnet, dass** der Elektromotor (3) derart gespeist wird, dass nacheinander entgegengesetzte Momente erzeugt werden, die kleiner als das magnetische Rückstellmoment sind und entsprechend einer Frequenz, die im Wesentlichen gleich einer Resonanzfrequenz einer Einheit ist, die das bewegliche Teil und das Paar von Magneten umfasst.

2. Vorrichtung zur Winkelpositionierung zum Durchführen dieses Verfahrens, umfassend ein ortsfestes Gestell (1), einen Elektromotor (3), der eine Abtriebswelle hat, die mit einem beweglichen Teil (2) verbunden ist, das gegenüber dem Gestell drehbar gelagert ist, sowie ein Paar von Magneten (4, 5), die an dem Gestell bzw. dem beweglichen Teil gelagert sind, um durch das Drehen des beweglichen Teils in eine einander gegenüberliegende Stellung gebracht werden zu können, und die derart gepolt sind, dass sie sich gegenseitig anziehen, wenn sie in der Gegenüberstellung sind, und ein magnetisches Rückstellmoment zum Rückstellen des beweglichen Teils in die Gegenüberstellung ausüben, und **dadurch gekennzeichnet, dass** die Vorrichtung eine Steuereinheit umfasst, die so ausgebildet ist, dass die den Elektromotor derart speist, dass nacheinander entgegengesetzte Momente erzeugt werden, die kleiner als das magnetische Rückstellmoment sind und entsprechend einer Frequenz, die im Wesentlichen gleich einer Resonanzfrequenz einer Einheit ist, die das bewegliche Teil und das Paar von Magneten umfasst.

**Claims**

1. Method of controlling an angular positioning device including a fixed frame (1), an electric motor (3) having an output shaft connected to a mobile part (2) mounted to pivot facing the frame, and a pair of magnets (4, 5) which are respectively mounted on the frame and on the mobile part so that they can be brought into a position facing one another by pivoting of the mobile part and which are polarised so as to attract one another when they are in the position facing each other and to exert a magnetic torque for returning the mobile part to the facing position, the control method including the step of powering the electric motor (3) so as to overcome the magnetic return torque, **characterised in that** the electric motor (3) is powered so as successively to produce opposite torques less than the magnetic return torque at a frequency substantially equal to a resonant frequency of an assembly comprising the mobile part and the pair of magnets.

2. Angular positioning device for the implementation of this method, including a fixed frame (1), an electric motor (3) having an output shaft connected to a mobile part (2) mounted to pivot facing the frame, and a pair of magnets (4, 5) which are respectively mounted on the frame and on the mobile part so that they can be brought into a position facing one another by pivoting of the mobile part and which are polarised so as to attract one another when they are in the facing position and to exert a magnetic torque for returning the mobile part to the facing position, and **characterised in that** the device includes a control unit adapted to power the electric motor so as successively to produce opposite torques less than the magnetic return torque at a frequency substantially equal to a resonant frequency of an assembly comprising the mobile part and the pair of magnets.

Figure 1

Figure 2

Figure 3

Figure 4